# EUROPÄISCHE PATENTSCHRIFT

(11) **EP 1 190 008 B1**
(45) Veröffentlichungstag und Bekanntmachung des Hinweises auf die Patenterteilung: **10.01.2007**
(21) Anmeldenummer: 00935065.3
(22) Anmeldetag: 18.05.2000
(51) Int. Cl.: C09J 7/02

(54) **UNVERSTRECKTE OBERFLÄCHENSCHUTZFOLIE AUS POLYPROPYLENBLOCKCOPOLYMER**
UNDRAWN SURFACE-PROTECTION FILM MADE FROM POLYPROPYLENE BLOCK COPOLYMERS
FEUILLE POUR LA PROTECTION DE SURFACES, NON ETIREE, EN COPOLYMERE SEQUENCE DE POLYPROPYLENE

(30) Priorität: 22.05.1999 DE 19923780
(43) Veröffentlichungstag der Anmeldung: 27.03.2002
(73) Patentinhaber: tesa AG, 20253 Hamburg (DE)
(72) Erfinder: BÖHM, Nicolai, D-20357 Hamburg (DE); HIRSCH, Ralf, D-25451 Quickborn (DE); KLEMP, Jobst-Waldemar, D-22869 Schenefeld (DE); MEYER, Robert, D-22844 Norderstedt (DE); MÜSSIG, Bernhard, D-21218 Seevetal (DE)
(86) Internationale Anmeldenummer: PCT/EP2000/004505
(87) Internationale Veröffentlichungsnummer: WO 2000/071633

(56) Entgegenhaltungen:
- EP-A- 0 215 189
- EP-A- 0 826 754
- WO-A-97/38059
- PATENT ABSTRACTS OF JAPAN vol. 1996, no. 10, 31. Oktober 1996 (1996-10-31) & JP 08 143838 A (NITTO DENKO CORP;KANSAI PAINT CO LTD), 4. Juni 1996 (1996-06-04)

## Beschreibung

Die Erfindung betrifft eine witterungsstabile selbstklebende Schutzfolie mit hoher Haftung zum Schutz von Oberflächen wie Glas, Keramik, VA-Stahl, Polycarbonat- oder Acrylglas, insbesondere von lackierten Oberflächen. Insbesondere sind die erfindungsgemäßen Schutzfolien zum Schutz des frischen Abschlußlacks von Fahrzeugen wie Automobilen und zum Schutz von frisch lackierten Fahrzeugteilen gegen Verschmutzungen und Beschädigungen während der Montage, des Transports und der Lagerung geeignet.

Für Oberflächenschutz auf unlackierten Flächen gibt es viele Produkte. Lackierte Flächen werden bisher wenig mit selbstklebenden Schutzfolien abgedeckt, in frischem, unausgehärtetem Zustand fast gar nicht. Bei der Verwendung üblicher Schutzfolien auf frischem Lack treten zahlreiche Mängel auf wie Klebstoffrückstände, Verfärbungen, starkes Aufziehen (Anstieg der Verklebungsfestigkeit nach Lagerung im verklebten Zustand), Reißen beim Entfernen, Schrumpf bei Lagerung, schwache Anfangshaftung oder geringe Dehnbarkeit (insbesondere bei unebenen Verklebungsuntergünden) auf.

Nach längerer Zeit, insbesondere nach Bewitterung, werden solche Effekte verstärkt. Die Anwendung auf Fahrzeugen (Automobilen) und Fahrzeugteilen (zum Beispiel Stoßfänger), bei denen die Oberfläche während Montage oder Transport geschützt werden soll, ist daher ein anspruchsvolles Problem. Die Konservierung und der Schutz von Kraftfahrzeugen während des Transports vom Hersteller zum Händler wird schon seit geraumer Zeit praktiziert.

Bekannt ist, daß zum Konservieren von Automobilen Paraffinwachse in der Stärke von 5 bis 20 µm aufgetragen werden. Es hat sich aber gezeigt, daß insbesondere bei waagerecht liegenden Flächen der Fahrzeuge eine derart dünne und zumeist ungleichmäßige Schicht gegen äußere Einflüsse, wie beispielsweise die ätzende Wirkung von Vogelkot, nicht genügend Schutz bietet.

Ein erheblicher Nachteil der Paraffinwachsversiegelung ist die notwendige Entkonservierung mittels Dampfstrahl, Tensiden oder Lösungsmitteln. Die umweltgerechte Rückgewinnung und Entsorgung der Rückstände verursachen einen großen apparativen Aufwand sowie sehr hohe Kosten.

Reversibel klebende Selbstklebefolien zum Schutz des Automobils während des Transports sind ebenfalls seit einiger Zeit bekannt, haben bisher aber nur in geringem Umfang Verwendung gefunden. In den vielen Fällen handelt es sich dabei um permanent klebende Schutz- und Dekorfolien, wie zum Beispiel eine Steinschlagschutzfolie. Diese Selbstklebefolien verbleiben nach ihrer Montage permanent am Fahrzeug.

Klebebänder beziehungsweise Schutzfolien mit Selbstklebemassen auf Naturkautschukbasis haben eine relativ gute Anfangshaftung und lassen sich rückstandsfrei wiederabziehen. Diese Massen sind allerdings selbst bei kurzzeitiger Einwirkung von UV-Strahlung nicht alterungsstabil. Dies führt zu starken schmierigen oder lackartig verhärteten Rückständen auf dem lackierten Blech nach extremen Witterungsbeanspruchungen über einen längeren Zeitraum (drei bis sechs Monate).

Polyacrylatmassen sind dagegen sehr UV-stabil. Unterwirft man unvemetzte Polyacrylatmassen einer Wechselklimalagerung, so zeigen sie nur teilweise eine gute Verträglichkeit mit Lackoberflächen. Mit Verträglichkeit ist gemeint, daß nach Entfernen des Klebebandes keine Störungen auf der Oberfläche sichtbar sind. Auf der anderen Seite zeigen diese aber ein starkes Aufziehverhalten, daß sie beim schweren Abziehen der Folie starke Rückstände der Klebemasse auf dem Haftgrund hinterlassen. Wenn diese Massen chemisch oder durch Strahlen stark vemetzt werden, lassen sie sich teilweise rückstandsfrei abziehen, verursachen aber auf der anderen Seite bleibende Deformationen an der Lackoberfläche und zeigen zum Teil darüber hinaus auch noch eine ungenügende Haftung bei Verklebung auf gewölbten lackierten Flächen.

Aus der JP 02 199 184 ist ein strahlenvemetzbarer Haftklebstoff bekannt, bei dem für die Schutzanwendung auf Lackschichten eine niedrige Glasübergangstemperatur eingestellt werden muß, um bleibende Verformungen der Lackschicht zu verhindern. Hier treten Probleme wegen mangelnder Haftfestigkeit der Selbstklebefolie auf den Kraftfahrzeugen während der Applikation und des Transports auf.

Dies gilt auch für Acrylate, wie sie in der US 5,612,136 beschrieben sind. Das dort offenbarte Verfahren der Bestrahlung schädigt zudem die Folie, so daß deren Bewitterungsstabilität herabgesetzt ist, wenn man dabei solange bestrahlt, bis die Restmonomere durch Polymerisation vollständig abgebaut sind. Bei geringeren Bestrahlungsdosen ist der Gehalt an Restmonomeren so hoch, daß diese in den Fahrzeuglack einwandern und ihn dadurch anquellen. Ein weiterer Nachteil ist die Migration von Photoinitiatoren in den Lack, wo sie dessen UV-Stabilität herabsetzen.

Selbstklebemassen auf Polyisobutylenbasis (Polyisobutylenhomopolymer oder Butylkautschuk) zeigen im Verklebungstest, bei dem sie auf lackierte Bleche aufgebracht werden und danach einer Wechselklimalagerung unterliegen, ein leichtes Abziehen. Die Anfangshaftung ist jedoch gering, daß kritische Kanten mit einem stärker klebenden Klebeband (einem sogenannten Kantensicherungsband) fixiert werden müssen. Insbesondere bei Feuchteeinfluß auf die Folie ist die Haftfestigkeit häufig derart reduziert, daß sich die Folie während des Transports der mit ihr geschützten Fahrzeuge von diesen ablöst, so daß keine Schutzwirkung mehr vorhanden ist. Diese Kleber sind darüber hinaus weich (wenig kohäsiv) und zeigen daher Masserückstände beim Abziehen der Folie, insbesondere im Kantenbereich nach UV-Alterung. Darüber hinaus weist diese Selbstklebemasse keine Verträglichkeit mit den im Automobilbau üblichen Dichtungsgummis (Dichtungsprofilen) beziehungsweise den darin enthaltenen Weichmachern auf; beim Abziehen der Schutzfolie von Fensterprofilen verbleiben auf dem Gummi Masserückstände der Klebebeschichtung. Derartige Klebebänder beziehungsweise Klebefolien sind in EP 0 519 278, JP 95-325285 und US 5,601,917 beschrieben.

In der EP 0 592 913 ist eine Oberflächenschutzfolie für den Transport von Automobilen beschrieben, die aus Copolymerisat aus EVAc mit einem Gehalt von 33 % Vinylacetat besteht. Das Aufbringen einer Klebeschicht erfolgt bei dieser Schutzfolie nicht. Eine derartige Folie weist einen zugegebenermaßen einfachen Aufbau auf, zeigt aber in ihrer Verwendung deutliche Nachteile. Die Klebkraft ist wegen des hohen kristallinen Anteils sehr gering, dieser Mangel soll durch Erwärmen bei der Applikation beseitigt werden. Auch führen diese Folien, wenn sie nicht mit einer trennenden Eindeckung (zum Beispiel Silikonpapier) versehen sind, zum Verblocken bei Lagerung, wie die EP 0 768 356 lehrt. Die beschriebenen Folien weisen starke Lackdeformation und sehr schweres Abziehen nach Gebrauch auf. Letzteres ist darauf zurückzuführen, daß das in den Beispielen beschriebene EVAc mit 33 % (w/w) Vinylacetat Siegeleigenschaften aufweist (es wird üblicherweise für Siegelanwendungen eingesetzt). Ab 40 % (w/w) Vinylacetat ist der kristalline Anteil so gering, daß dieser Mangel nicht auftritt, daher enthält die erfindungsgemäße Schutzfolie auch bevorzugt einen Kleber mit hohem Vinylacetatgehalt.

Die in der DE 195 32 220 dargelegte Klebefolie mit EVAc-Kleber ist den beschriebenen Produkten in der Haftung deutlich überlegen. Eine Beeinflussung der zu schützenden Lacke tritt mit Ausnahme von Einkomponenten-PU-Systemen nicht auf. Diese Klebefolie weist aber beim Abziehen nach Gebrauch eine hohe Verklebungsfestigkeit auf, wodurch die Klebefolie nicht ohne Abrisse abgezogen werden kann. Diese Erhöhung der Verklebungsfestigkeit bei Lagerung des Klebeverbundes, vom Fachmann Aufziehen genannt, ist durch Wechselwirkungen des Klebers, insbesondere polare Kräfte, mit dem Lack bedingt. Auf der anderen Seite ergeben polare Comonomere wie Acrylat oder Vinylacetat die gewünschte hohe Anfangshaftung.

Wesentlich UV-stabiler als Polyisobutylene sind Kleber aus hydrierten Styrol-Dien-Block-copolymeren, deren Anwendung im Gebrauchsmuster DE 296 04 473 beschrieben ist. Ein wesentlicher Nachteil solcher Blockcopolymere ist deren thermisch reversible Vernetzung über die Styroldomänen. Zieht man eine daraus hergestellte Klebefolie im Sommer von einem in der Sonne erwärmten Fahrzeug ab, bleibt der Kleber zum großen Teil auf dem Lack haften, weil die Kohäsion der Klebemassen geringer als die der Haftung auf dem Lack ist. Eine Erwärmung führt stets zum Schrumpf der Schutzfolie, der in der Wärme weiche Kleber schmiert daher an den sich zurückziehenden Kanten der Klebefolie auf das Blech ab.

EP 0 661 364 beschreibt einen Oberflächenschutzfilm mit einer Klebemasse, die gute Anfangshaftung aufweisen soll. Es werden Verklebungsfestigkeiten auf Stahl bis zu 1 kg/25 mm beschrieben, was in etwa Klebkräften auf Stahl nach AFERA bis 4,0 N/cm entspricht und wodurch sich eine besonders hohe Haftung nach Lagerung des Verbundes ergibt. Die beschriebenen Folien sind nicht lichtstabil, da keine Maßnahmen wie der Zusatz von HALS-Lichtschutzmitteln oder lichtreflektierender Pigmente zur Erreichung einer für diese Anwendung notwendigen Lichtstabilisierung ergriffen werden. Die Verwendung von Schutzfolie auf der Außenseite von Fahrzeugen stellt besonders extreme Anforderungen in Bezug auf Lichtstabilität, insbesondere im UV-Bereich, so daß derartige Schutzfolien trotz guter Anfangshaftung für diese Anwendung völlig ungeeignet sind. Bei der Applikation auf Fahrzeugen spielt die Dehnbarkeit der Folie wegen gewölbter Flächen eine wichtige Rolle, die zitierte Erfindung hebt jedoch gerade auf die Eignung für ebene Flächen ("plates" und "boards") ab und versucht daher auch nicht die Kraft bei 10 % Dehnung zu limitieren, um eine hinreichende Dehnbarkeit zu erzielen.

Die WO 96/37568 beschreibt die Verwendung von Polyhexen beziehungsweise Polyocten für einen unpolaren Haftkleber. Die in den Beispielen beschriebenen Polymere weisen zwar ein geringes Aufziehen auf wegen der geringen Kohäsion, bedingt durch das niedrige Molekulargewicht derartiger handelsüblicher Polymere führen diese Polymere aber ebenfalls zu Rückständen, die man durch Zugabe anderer Polymere, dort "cold flow restricting agent" genannt, zu vermeiden versucht. Für die Praxis sind die genannten Kleber trotzdem noch zu wenig kohäsiv (weich), was nach Bewitterung zu Rückständen führt, insbesondere wenn das Klebeband durch Wärmeeinwirkung schrumpft.

Die Aufgabe der Erfindung ist demgemäß, eine Klebefolie zur Verfügung zu stellen, die eine hinreichend hohe Anfangsverklebungsfestigkeit besitzt, damit beim Verkleben unter Spannung (Applizieren der Klebefolie an gewölbte Flächen) keine Ablösung auftritt, und die nach längerer Lagerung (bis zu einem Jahr unter Bewitterung) trotzdem wieder leicht abziehbar ist. Gleichzeitig soll kein Schrumpf auftreten und die Schutzfolie ohne Abrisse und ohne Siegeln ablösbar sein. Auch soll keine trennende Eindeckung zur Lagerung notwendig sein.

Gelöst wird diese Aufgabe durch eine Schutzfolie, wie sie im Hauptanspruch niedergelegt ist. Gegenstand der Unteransprüche sind vorteilhafte Weiterbildungen des Erfindungsgegenstands. Des weiteren umfaßt die Erfindung auch besondere Einsatzfelder der erfindungsgemäßen Schutzfolie sowie ein Verfahren zur Herstellung derselben.

Demgemäß betrifft der erfindungsgemäße Gegenstand eine selbstklebende Schutzfolie (auch Oberflächenschutzklebeband genannt), die aus einer Schicht einer ungereckten Trägerschicht (auch Träger oder Trägerfolie genannt) und einer Kleberschich aus mindestens einem Copolymeren aus Ethylen und Vinylacetat besteht.

In vorteilhaften Ausführungsformen der Erfindung können weitere Schichten wie Haftvermittler oder Release zusätzlich vorhanden oder Bestandteil der genannten Schichten sein.

Als Trägerschicht des Klebers dient eine thermoplastische Polyolefinfolie, welche unverstreckt ist und mindestens ein Polypropylenblockcopolymer enthält. Der Gehalt an Polypropylenblockcopolymer macht 10 bis 95 % (w/w) der Schutzfolie aus.

Vorzugsweise liegt die UV-Durchlässigkeit der Schutzfolie im Bereich von 290 bis 360 nm unter 1 %, vorzugsweise unter 0,1 %. Weiterhin beträgt die Klebkraft auf Stahl bevorzugt zwischen 0,2 und 3,8 N/cm, insbesondere zwischen 0,7 und 1,7 N/cm.

Derartige Folien können auf Blasanlagen oder vorzugsweise Cast-Anlagen (T-die technology) gefertigt werden, wobei die Folie nicht durch Recken (Verstrecken) mit Reckwalzen oder Reckrahmen mono- oder biaxial verstreckt wird. Beim Blasen einer solchen Folie ist die Orientierung über Abzugsgeschwindigkeit, Aufblasverhältnis und Temperaturprofil so gering wie möglich zu halten.

Die erfindungsgemäß verwendeten Polypropylenblockcopolymere (auch lmpact Resistant Polypropylen genannt) sind in der Literatur in Encycl. Polym. Sci. Technol. 13, 479ff (1988) und in Ullmann's Encyclopedia of Industrial Chemistry A21, 529ff (1992) beschrieben. Beispiele für Handelsnamen sind Propathene GSF 113 (ICI), 411 GA 05 (Amoco), PMA 6100 (Montell), Stamylan P (DSM), BD 801 F (Borealis), Daplen FFC1012 (PC), Novolen 2309 L.
Derartige Blockcopolymere unterscheiden sich untereinander im wesentlichen im Schmelzindex (= MFI = MFR) und im Gehalt an Comonomer. Der Schmelzindex beeinflußt die Festigkeit der Folie und die Fließfähigkeit der Schmelze in gegenläufiger Weise. Für die Herstellung der erfindungsgemäßen Schutzfolie ist ein Schmelzindex von 0,8 bis 15 g/10 min (ISO 1133 (A/4) bei 230 °C und 2,16 kg) günstig, um die Erfordernisse nach Zähigkeit und Reißfestigkeit einerseits und Verarbeitbarkeit (Produktionsgeschwindigkeit und Gleichmäßigkeit der Dicke bei coextrudierten Folien) andererseits zu erreichen. Der bevorzugte Bereich liegt zwischen 4 und 10 g/10 min. Die Coextrusion ist bei diesem Produkt ein geeignetes Mittel, um die Haftvermittlungsschicht bei der Herstellung der Folie einzubringen.
In dem Fall, daß Trägerfolie und Kleber durch Coextrusion miteinander verbunden werden, ist die Auswahl des Schmelzindex des Polypropylenblockcopolymers wie auch der weiteren thermoplastischen Bestandteile der Folienrezeptur wichtig. Der Gehalt an Comonomer in Polypropylenblockcopolymeren bestimmt die Weichheit, Schlagzugzähigkeit und die Wärmebeständigkeit der daraus hergestellten Schutzfolie. Vorzugsweise enthält die erfindungsgemäße Schutzfolie ein Polypropylenblockcopolymer mit 3 bis 15 % (w/w) Ethylen als Comonomer. Die Schlagzugzähigkeit nach DIN 53448 sollte längs und quer mindestens 1000 mJ/mm² betragen.

Als weitere Bestandteile können zum Beispiel Polyethylen (wie zum Beispiel HDPE, LDPE, MDPE, LLDPE, VLLDPE), Copolymere des Ethylens oder Propylens mit polaren Comonomeren, Polypropylen-Homopolymere oder Polypropylen-Random-Copolymere zur Feinabstimmung der Eigenschaften (mechanische, thermische oder andere Eigenschaften wie Glanz, Haftung des Klebers, Extrusionsverhalten usw.) mitverwendet werden. Besonders vorteilhaft ist die Kombination von mehreren Polypropylenen, insbesondere unterschiedlicher Weichheit und unterschiedlicher Schmelzindices, wie zum Beispiel weichem Blockcopolymer mit PP-Homopolymer oder einer harten Blockcopolymertype, da Zähigkeit, Wärmebeständigkeit und Fließverhalten besser an die Notwendigkeiten angepaßt werden können als bei alleiniger Verwendung eines Blockcopolymers. Für eine hinreichende Wärmebeständigkeit sollte der Anteil an Propylen in einer Folienschicht mindestens 65 % (w/w) betragen. Bei mehrlagigem Aufbau der Folienschicht ist dies diejenige Schicht, die für die Festigkeit verantwortlich ist und daher den höchsten Polypropylenanteil enthält (in der Regel auch die höchste Dicke aufweist) und nicht eine eventuelle Haftvermittlerschicht

Für die Trägerfolien sind Dicken von 20 bis 80 µm (gegebenenfalls einschließlich der Haftvermittlerschicht) bevorzugt. Die Weichheit der Trägerfolie spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- als auch in Querrichtung nicht überschreiten (Zugversuch nach DIN 53455-7-5). Dies ist auch einer der Gründe, warum die Trägerfolien unverstreckt sein sollen. Durch Strecken (auch Recken genannt) steigt die Kraft bei 10 % Dehnung so stark an, daß die Anschmiegsamkeit nicht mehr gegeben ist (zum Vergleich typische Werte für monoaxial verstrecktes PP-Blockcopolymer 100 N/15 mm und für biaxial verstrecktes Homopolymer 180 N/15 mm).

Weiterhin wird die Festigkeit in Querrichtung zum Verstrecken oder in der dritten Dimension (senkrecht zur Folienoberfläche) so stark reduziert, daß beim Abziehen der erfindungsgemäßen Schutzfolie die Gefahr von Abrissen oder Delamination in der dritten Dimension (auch Spleißen genannt) auftritt. Dies gilt insbesondere bei Klebern mit besonders guter Haftung wie zum Beispiel die bevorzugten Kleber aus Ethylen-Vinylacetat-Copolymer. Die Verwendung von Polypropylen-Blockcopolymer stellte sich auch in dieser Hinsicht als besonders geeignet heraus, so daß bei Verwendung eines gut haftenden Klebers die Schutzfolie beim Wiederabziehen nicht reißt. Bei einem Test von Oberflächenschutzbändem nach UV-Bewitterung stellte sich heraus, daß bei Trägerfolie aus normalem Polypropylen (Polypropylenhomopolymer), normalem Polyethylen (HDPE) oder einer Mischung hiervon im Verhältnis 1:1 sehr schnell eine Versprödung auftritt, bei LDPE oder Polypropylen-Random-Copolymer (mit 5 % Ethylen) sind die Verhältnisse günstiger, bei Polypropylen-Blockcopolymer mit 3 bis 15 % (w/w) Ethylen werden die besten Ergebnisse erzielt. Die Vorteile der Verwendung Polypropylen-Blockcopolymer für die Trägerfolie sind daher insbesondere im sehr praxisrelevanten Fall beim Abziehen nach Bewitterung herausragend. Bei der in dieser Erfindung bevorzugten Kombination von Polypropylen-Blockcopolymer für die Trägerfolie und stark haftendendem Ethylen-Vinylacetet-Copolymer für den Kleber können die wichtigen Eigenschaften hoher Haftung aber auch guter Wiederablösbarkeit der Schutzfolie in eindrucksvoller Weise widerspruchslos erzielt werden.

Als weiterer Vorteil stellte sich die Beständigkeit der erfindungsgemäßen Schutzfolie gegen Schrumpf in der Wärme heraus. Dies ist wichtig, damit sich an den Kanten der mit der Schutzfolie abgedeckten Oberfläche keine Schmierspuren des Klebers bilden. Weiterhin ist dies günstig für den Durchgang der Folienbahn durch einen Ofen zwecks Trocknung des Klebers. Schutzfolien aus Polyethylen als wesentlichem Bestandteil haben unzureichende Wärmebeständigkeit, auch wenn die Anschmiegsamkeit (Dehnbarkeit) für die Automobilanwendung besonders günstig ist.

Die Verwendung von Polyethylen oder Polypropylen-Random-Copolymeren als Hauptbestandteil der Folie von Oberflächenschutzbändem ist üblich, weil die Anschmiegsamkeit (siehe oben unter Weichheit/Verformbarkeit) günstig ist. Auch die Zähigkeit ist besser als beim wärmebeständigen aber dafür wenig spröden Polypropylen(homopolymer). Dies gilt auch für Schutzfolien zur Abdeckung von Automobilen. Derartige Schutzfolien haben allerdings den Nachteil, daß die Wärmebeständigkeit nur mäßig ist. Die Verwendung von Polypropylen-Block-Copolymeren als Hauptbestandteil der Folie der erfindungsgemäßen Oberflächenschutzbänder löst in einmaliger Weise den Konflikt zwischen ausreichender Weichheit einerseits und Wärmebeständigkeit andererseits. Dies gilt ebenso für die widersprüchliche Forderung nach hoher Zähigkeit bei gleichzeitiger Wärmebeständigkeit. Die erfindungsgemäßen Schutzfolien weisen vorzugsweise einen Schrumpf in Längs- und Querrichtung von weniger als 3 %, besonders bevorzugt von weniger als 1 % auf. Die Messung des Schrumpfes erfolgt in einem Umluftofen bei 120 °C. Die Probe wird hierzu für 10 Minuten auf eine stark talkumierte Pappe gelegt.

Überraschend ist auch die Tatsache, daß Polypropylen-Blockcopolymer als wesentlicher Folienbestandteil das Abrollverhalten günstig beeinflußt. Derartige Schutzfolien werden in der Regel mit über 1 m Breite verwendet. Die Abrollkraft wird dann relativ hoch, insbesondere in Gegenwart von stark haftenden Klebern. Daher kann bei der erfindungsgemäßen Schutzfolie in der Regel auf eine Releasebeschichtung zum leichteren Abrollen verzichtet werden. Stark klebendes Ethylen-Vinylacet-Copolymer als Kleber führt nach Lagerung der Rollen des Oberflächenschutzbandes (Schutzfolie) zu relativ schwerem Abrollen, wenn weder ein Release noch ein Polypropylen-Blockcopolymer als wesentlicher Folienbestandteil verwendet werden. Daher ist diese Kombination besonders günstig. Ein schweres Abrollen führt nicht nur zur Überanstrengung der verwendenden Personen, sondern auch zur irreversiblen Verdehnung der Schutzfolie an den Stellen, an denen die Person (oder eine Greifeinrichtung) anfaßt, um die Rolle abzuwickeln.

Als Klebemassen werden EVM (Ethylen-Vinylacetat-Copolymer) verwendet. Die für die Folie genannten Lichtschutzmittel können auch bei der Klebemasse angewendet werden. Dieser Zusatz erhöht die Alterungsstabilität der Klebemasse insbesondere bei UV-Belastung über 100 kLy (Kilolangley), ist aber für Anwendungen bis zu 6 Monaten Außenbewitterung bei Klebern aus Ethylen-Vinylacetat-Copolymer entbehrlich.

Es kann vorteilhaft sein, die Klebemasse zu vemetzen. Dadurch steigt die Wärmebeständigkeit (zum Beispiel bei Wechselklima); das Aufziehen auf rauhe oder unpolare Untergründe wie Fensterdichtungen aus Synthesekautschuk wird dadurch reduziert. Die Vernetzung verbessert vor allem auch die Scherfestigkeit. Diese ist bei der Anwendung als Schutzfolie von besonderer Bedeutung, da sie dem Schrumpf der Schutzfolie in der Anwendung Widerstand leistet. Für die Vernetzung sind die üblichen Vernetzungsmittel geeignet. Bevorzugt wird das Verfahren der Strahlenvernetzung, insbesondere mit UV-und Elektronenstrahlen. Im Fall von UV-Strahlen wird die Klebemasse von der Klebemassenseite bestrahlt. Durch die Anwendung von Photoinitiatoren oder durch Zugabe von Vemetzungspromotoren wie Estern des Allylalkohols, der Methacrylsäure oder der Acrylsäure zur Klebemasse kann die Strahlungsdosis verringert werden.

Als besonders geeignet stellten sich Ethylen-Vinylacetat-Copolymere mit einem VAc-Anteil von mindestens 40 % (w/w) heraus. Diese garantieren eine auch in kritischen Fällen (klebstoffabweisende Lacke oder stark gekrümmte Verklebungsflächen) hohe Verklebungsfestigkeit und weisen selbst ohne Zusatz von Lichtschutzmitteln im Kleber eine hohe Witterungsstabilität auf. Bevorzugt wird ein VAc-Anteil von 55 bis 70 % (w/w). Die Kombination von unverstrecktem Polypropylen-Blockcopolymer als Trägerfolie und Ethylen-Vinylacetat-Copolymer als Kleber ist auch deshalb günstig, da das eine Material einen geringen Schrumpf aufweist und das andere einen sehr hohen Widerstand (Scherfestigkeit) gegen den Schrumpf im verklebten Zustand leistet. Die Scherfestigkeit ist so gut, daß in der Regel auf eine Vernetzung verzichtet werden kann.

Zur Optimierung der Eigenschaften, insbesondere des Klebeverhaltens auf speziellen Lacken, kann die zum Einsatz kommende Selbstklebemasse (Kleber) mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln oder Vernetzungspromotoren abgemischt sein.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α-oder β-Pinen, aromatische Harze wie Cumaron-Inden-Harze oder Harze aus Styrol oder α-Methylstyrol, wie Kolophonium und seine Folgeprodukte wie disproportionierte, dimerisierte oder veresterte Harze, wobei Glycole, Glycerin oder Pentaerythrit eingesetzt werden können sowie weitere wie aufgeführt in Ullmann's Enzyklopädie der technischen Chemie, Band 12, Seiten 525 bis 555 (4. Aufl.), Weinheim. Besonders geeignet sind alterungsstabile Harze ohne olefinische Doppelbindung wie zum Beispiel hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeignete UV-Absorber, Lichtschutz- und Alterungsschutzmittel für die Klebemassen sind die selben, die weiter unten für die Stabilisierung der Folie aufgeführt sind.

Geeignete mitzuverwendbare Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vemetzungspromotoren sind zum Beispiel Maleinimide, Allylester wie Triallylcyanurat, mehrfunktionelle Ester der Acryl- und Methacryläure.

Für einige Lacksysteme ist es vorteilhaft, Bestandteile der Lacke dem Kleber hinzuzufügen, um die Migration von Lackbestandteilen (zum Beispiel Fettsäureester des Glycerins, Silicone oder sonstige Weichmacher) aus dem Lack in die Klebemasse zu verringern. Derartige Lackbestandteile sind in EP 0 763 584 und US 5,612,135 näher beschrieben.

Darüber hinaus ist es für die stoffliche und thermische Verwertung vorteilhaft, wenn der Kleber, insbesondere die gesamte Schutzfolie, halogenfrei ist.

Zur Verbesserung der Haftung zwischen Folie und Kleber ist das Aufbringen einer Haftvermittlerschicht vorteilhaft. Die besonders bevorzugte Lösung ist eine Trägerfolie bestehend aus einer Basisschicht mit Polypropylen-Blockcopolymer und einer Haftvermittlerschicht. Letztere besteht vorzugsweise aus Polymeren und/oder Komponenten von Basisschicht und/oder Kleber. Der Haftvermittler enthält besonders bevorzugt mindestens ein Polymer, welches mindestens ein α-Olefin und ein polares Comonomer enthält. Beispiele hierfür sind lonomer, Ethylen-Vinylacetat-Copolymer, Ethylen(meth)acrylsäurecopolymer oder Maleinsäureanhydrid-modifizierte Polyolefine.

Der Haftvermittler kann durch Coextrusion mit der Basisfolie oder durch Coextrusion mit Basisfolie und Kleber oder durch Beschichtung auf der Basisfolie aufgebracht werden.

Eine vorteilhafte Ausführungsform besteht darin, daß der Haftvermittler bei der Extrusion der Folie simultan aufgebracht wird, so daß die erhaltene Coextrusionsfolie nur noch mit dem Kleber beschichtet zu werden braucht. Die technisch beste Lösung für die erfindungsgemäße Schutzfolie ist die simultane Coextrusion von Folie und Kleber (ggf. einschließlich einer Haftvermittlerschicht).

Um die Trägerfolie witterungsstabil einzustellen, ist der Zusatz von Lichtschutzmitteln zu empfehlen. Die Funktion bei der Anwendung auf der Schutzfolie besteht vorrangig in der Vermeidung der Versprödung der Trägerfolie zur Vermeidung von Problemen beim Wiederabziehen des Oberflächenschutzklebebandes. Im Fall einer mehrlagigen Trägerfolie bezieht sich der Schutz insbesondere auf die dickere Basisschicht. Derartige Lichtschutzmittel sind bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.) 8. 21; 15, 529, 676 beschrieben. Insbesondere HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9) sind für die erfindungsgemäße Schutzfolie geeignet. Die Menge des Lichtschutzmittels sollte mindestens 0,15, vorzugsweise mindestens 0,30 % (w/w) bezogen auf die Trägerfolie betragen.

Eine Verwendung von Antioxidantien für die Folie (zum Beispiel lrganox 1010 oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 aufgeführt.

Eine Verbesserung der Lichtstabilität von Trägerfolie und Kleber ist auch noch durch andere Zusätze in der Schutzfolie, insbesondere der Basisschicht der Trägerfolie, möglich. Dies kann durch UV-Absorber (zum Beispiel Tinuvin P, Ciba) oder vorrangig durch reflektierende Pigmente (zum Beispiel Titandioxid) erfolgen.

Es kann zweckmäßig sein, Folienadditive wie Titandioxid, Lichtschutzmittel, Alterungsschutzmittel oder Verarbeitungshilfsmittel einzeln oder zusammen vorzubatchen, vorzugsweise in Polyethylen, Polypropylen oder Polypropylenblockcopolymer.

Der Erfindungsgegenstand ist insbesondere zur Anwendung auf lackierten Fahrzeugen wie Automobilen geeignet. Dabei ist eine Verklebungsfestigkeit von mindestens 0,7 N/cm schon im frisch verklebten Zustand wünschenswert (Methode AFERA 4001 entsprechend DIN EN 1939), damit sich die Folie kurz nach Applikation durch die Spannungen (insbesondere bei unebener Verklebung) nicht an Verklebungskanten ablösen oder gar beim Transportieren oder Fahren des Automobils durch den Fahrtwind ganz ablösen kann. Da die Klebkraft auf Lacken von der jeweiligen Lackformulierung abhängt, kann die Klebkraft der Schutzfolie besser durch die Klebkraft auf Stahl (AFERA) charakterisiert werden. Sie soll frisch verklebt möglichst zwischen 0,5 und 3,8 N/cm, vorzugsweise zwischen 0,7 und 1,7 N/cm, liegen.

Die Vorteile des unverstreckten Polypropylen-Blockcopolymers für eine Automobilschutzfolie sind bereits dargestellt worden. Fast alle Versuche, Kleber, Haftvermittler und Folie (aus dem Blockcopolymer) durch Coextrusion in einem Arbeitsschritt herzustellen sind bisher gescheitert, da bei einer Breite von über 1 m keine gleichmäßige Schichtdickenverteilung erzielt werden konnte. Die Nacharbeitung von aus der Literatur bekannten Beispielen zur Herstellung von Schutzfolien allgemeiner Art durch Coextrusion zeigt, daß keine anwendungsgerechte Schichtdickenverteilung erzielt werden konnte, wenn die Breite der Anlage über 1 m beträgt. Dies gilt insbesondere bei Verwendung von Rohstoffen für stark haftende Kleber, also nicht nur leicht klebriger teilkristalliner Copolymerer wie sie üblicherweise für Siegelschichten verwendet werden. Es war daher sehr überraschend, daß sich Ethylen-Vinylacetat-Copolymere mit mindestens 40 % (w/w) Vinylacetat mit Blockcopolymeren wie im Beispiel beschrieben coextrudieren ließen. Die Schichtdickenverteilung ist so gut, daß bei 1000 m Lauflänge und 1,5 m Breite gleichmäßig gewickelte Rollen entstanden und die Klebkraft auf Stahl (AFERA 4001) über die Breite in einem Toleranzbereich von ± 20 % liegt. Um dieses Ergebnis zu erreichen, müssen die Schmelzindices der Rohstoffe der Schichten und die Temperaturen der Schmelzeströme aufeinander abgestimmt werden.

### Am günstigsten sind folgende Bereiche:

Die Schmelzinidices der Folie (auch Teilschichten wie Primer) sind von 1 bis 10 g/10 min bei 230 °C und 2,16 kg und für den Kleber 0,5 bis 10 g/10 min bei 190 °C und 2,16 kg. Die Temperatur der Kleberschmelze liegt unter der Folie (gemessen an der Stelle der Vereinigung der Schmelzeströme).

Für den Fachmann überraschend und nicht vorhersehbar zeigt eine Schutzfolie mit einer Trägerschicht aus ungereckter Folie basierend auf mindestens einem Polypropylenblockcopolymer und gegebenenfalls Lichtschutzmittel in einer Menge von mindestens 0,15 % (w/w), bei einem Gehalt an Polypropylenblockcopolymer von 10 bis 95 % (w/w) in der Schutzfolie bei einer bevorzugten UV-Durchlässigkeit im Bereich von 290 bis 360 nm unter 1 % und einer die Klebkraft auf Stahl zwischen 0,2 und 3,8 N/cm, insbesondere bei Verwendung von Ethylen-Vinylacetat-Copolymer mit mindestens 40 % (w/w) Vinylacetat, die angestrebte Eigenschaftskombination:
- geringer Schrumpf (hohe Wärmebeständigkeit)
- gute UV-Beständigkeit
- hohe Zähigkeit (Schutz vor mechanischem Angriff)
- gute Dehnbarkeit
- hinreichende Verklebungsfestigkeit bei Applikation auf gewölbten Flächen
- keine Rückstände beim Abziehen der Schutzfolie

Die verwendeten EVAc-Selbstklebemassen weisen auf der einen Seite eine gute Haftfestigkeit auf verschiedenen in der Automobilindustrie gebräuchlichen Lacken auf, auch unter Feuchte- oder Feuchtklimaeinfluß, so daß sich die Schutzfolie auch unter Windeinwirkung oder unter Spannung durch Verklebung auf gewölbten Flächen nicht vom Fahrzeug ablöst. Darüber hinaus zeigt die Selbstklebemasse eine hinreichende Verklebungsfestigkeit innerhalb der ersten Minuten nach Applikation, so daß die Schutzfolie bereits nach einer halben Stunde zum Beispiel einer starken Fahrtwindbelastung (bis zu 160 km/h) ausgesetzt werden kann, andererseits nach längerem Gebrauch ohne Abrisse entfernbar ist. Weiterhin weist die erfindungsgemäße Schutzfolie auch ohne Auftragen einer Releaseschicht trotz stark haftenden Klebers eine für den Anwender hinreichend geringe Abrollkraft auf.

Die Abzugskraft (Klebkraft) der erfindungsgemäßen Schutzfolie von 2 K-PU-Lacken liegt in der Regel frisch über 0,7 und nach Wechselklimalagerung unter 4 N/cm (analog Methode AFERA 4001). Auch die Bestrahlung der Schutzfolie mit UV-Licht, beispielsweise mit Xenotest 1200 bei 55 °C über 3000 Stunden, führt zu keinen Mängeln in den Eigenschaften der Schutzfolie: Es treten keine Versprödung der Folie und keine Masserückstände beim Abziehen auf.

Die erfindungsgemäße Schutzfolie ist somit besonders zum Montage- oder Transportschutz des frischen Abschlußlacks von Automobilen oder als Bearbeitungs- und Transportschutz von frisch lackierten Stahlblechen geeignet. Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht vollständig ausgehärtet ist. Weiterhin zeigt die Schutzfolie auch bei der Verwendung als Kantensicherungsband zur zusätzlichen Befestigung andersartiger großflächiger selbstklebender Abdeckfolien mit geringer Klebkraft hervorragende Eigenschaften.

Weiterhin zeichnet sich die erfindungsgemäße Schutzfolie dadurch aus, daß sie bei Automobilen in großer Breite über Motorhaube, Dach und Kofferraum applizierbar ist und sich aufgrund ihrer Verformbarkeit planen und sogar leicht gewölbten geformten Flächen sehr gut anpaßt. Damit ist der Schutz der am stärksten durch Verschmutzung gefährdeten horizontalen Flächen möglich. Aber auch schmale Bereiche wie zum Beispiel der Türvorsprung unter den Fenstern oder Stoßfänger können leicht abgedeckt werden. Der Schutz der vertikalen Flächen am Fahrzeug bietet sich besonders während der Montage derselben an. Trotz der guten Dehnbarkeit zeigt sich nicht der Mangel des Schrumpfes von konventionellen gut verformbaren Polyethylen-Schutzfolien.

Die Schutzfolie ist beständig gegen Sonnenlicht, Feuchtigkeit, Hitze und Kälte, wobei die Witterungsstabilität von wenigstens einem Jahr gegeben ist. Insbesondere der Zusatz von Pigmenten wie Titandioxid sowie von Lichtschutzstabilisatoren führt zu einer Verbesserung der UV-Beständigkeit der Schutzfolie. Auch höchste Sonneneinstrahlungsquoten, wie sie beispielsweise in Florida auftreten, führen nicht zu einem Versagen oder Ablösen der Schutzfolie. Die extrem geringe UV-Durchlässigkeit der Schutzfolie vermeidet die Zersetzung des Klebers durch Sonneneinwirkung.

Darüber hinaus gewährleistet die Festigkeit der Schutzfolie im Vergleich zur Konservierung mit Wachs einen einwandfreien Schutz gegen Verschmutzungen wie Vogelkot und Beschädigungen des gesamten Fahrzeugs durch leichte mechanische Einwirkungen. Nach Gebrauch ist die Schutzfolie trotz der geforderten guten Haftfestigkeit rückstandsfrei und ohne Reißen der Trägerfolie abziehbar. Die stoffliche oder energetische Verwertung der Schutzfolie ist möglich, insbesondere weil selbige halogenfrei ist.

Im folgenden soll die Erfindung anhand von Beispielen erläutert werden.

### Beispiele

### Beispiel 1

Eine Folie wurde durch Flachfolienextrusion in 1450 mm Breite gefertigt. Sie bestand aus einer 50 µm dicken Basisschicht und einer 10 µm dicken Haftvermittlerschicht. Die Basisschicht bestand aus 91,3 % (w/w) aus Blockcopolymer Novolen 2309 L (BASF, Schmelzindex 6 g/10 min bei 230 °C und 2,16 kg, Ethylengehalt ca. 6,5 % (w/w)), 8,4 % (w/w) Titandioxid und 0,3 % (w/w) des HALS-Stabilisators Tinuvin 770. Die Haftvermittlerschicht bestand aus 50 % (w/w) aus Novolen 2309 L und 50 % (w/w) eines EVAc-Copolymers Escorene Ultra UL 00728 (Exxon). Vor der Extrusion wurden die Rohstoffe mit einem Betonmischer vorgemischt.

Die Folie wies folgende physikalische Eigenschaften auf:

| | | |
|---|---|---|
| Gesamtdicke Folie mit Haftvermittler | 60 µm | DIN 53370 |
| Gesamtgewicht Folie mit Haftvermittler | 59 g/m² | DIN 53365 |
| Zugfestigkeit längs | 45 N/mm² | DIN 53455-7-5 |
| Kraft bei 10 % Dehnung längs | 14,5 N/cm | DIN 53455-7-5 |
| Zugfestigkeit quer | 42 N/mm² | DIN 53455-7-5 |
| Dehnung längs | 820 % | DIN 53455-7-5 |
| Dehnung quer | 840 % | DIN 53455-7-5 |
| Schrumpf längs | 0,9 % | 10 min 120 °C |
| Schrumpf quer | 0 % | 10 min 120 °C |
| Schlagzugzähigkeit längs | >3000 mJ/mm² | DIN 53448 |
| Schlagzugzähigkeit quer | 2500 mJ/mm² | DIN 53448 |
| UV-Durchlässigkeit (Transmission) | 0,2 % | Spektralphotometer |

Als Kleber wurde eine 10 %ige Lösung folgender Rohstoffe in Toluol hergestellt:
- 65 % (w/w) eines Copolymers aus 70 % (w/w) Vinylacetat und 30 % (w/w) Ethylen mit einer Mooney-Viskosität ML (1+4) bei 100 °C (DIN 53523) ohne Vorbehandlung von 28.
- 30 % (w/w) eines Copolymers aus 45 % (w/w) Vinylacetat und 55 % (w/w) Ethylen mit einer Mooney-Viskosität ML (1+4) bei 100 °C (DIN 53523) ohne Vorbehandlung von 18.
- 4,8 % (w/w) eines hydrierten Kolophoniumglycerinesters.
- 0,2 % (w/w) Irganox 1010 (Antioxidans).

Die Klebstofflösung wurde mit einem Streichbalken auf die Folie aufgetragen und bei 80 °C in einem Kanal vier Minuten lang getrocknet. Die erhaltene Schutzfolie wurde am Rand besäumt und zu 200 m langen und 1400 mm breiten Rollen gewickelt. Der Kleberauftrag betrug 20 µm.

Die so hergestellte Selbstklebefolie ließ sich leicht und faltenfrei abwickeln und beim Gebrauch zum Schutz von Automobilen einwandfrei applizieren. Die Schutzfolie war durch die in der folgenden Tabelle wiedergegebenen physikalischen Eigenschaften gekennzeichnet.

| | |
|---|---|
| Gesamtdicke Schutzfolie | 80 µm |
| Klebkraft auf 2K-PU-Lack nach 3 Tagen 90 °C, einem Abzugswinkel von 180° und einer Abzugsgeschwindigkeit von 300 mm/min | 3,6 N/cm |
| Klebkraft auf der Rückseite bei einem Abzugswinkel von 180° und einer Abzugsgeschwindigkeit von 300 mm/min | 0,7 N/cm |
| Klebkraft auf Stahl | 1,0 N/cm |
| Klebkraft auf Lack | 0,9 N/cm |

Die Schutzfolie wurde auf frisch lackierten Blechen (2K-PU-Lack) verklebt und nach Temperaturlagerung (3 Tage 90 °C) abgezogen. Im Kantenbereich waren nur geringe Lackdeformationen zu erkennen, in der Fläche war in schrägem Licht ein geringer Brillianzverlust zu beobachten. An den Verklebungskanten war kein Schrumpf erkennbar. Auf Lackblech verklebte Muster wurden einer UV-Alterung unterzogen (1750 h Xenotest 150 entsprechend 97 kLy), nach dem Abziehen traten weder Klebemasserückstände auf noch Abrisse, an den Verklebungskanten war kein Schrumpf erkennbar. Eine gewölbte PKW-Motorhaube mit stark ausgeprägten Sicken wurde mit der Schutzfolie unter Zuhilfenahme eines Filzrakels beklebt. Es traten keine Falten oder Löcher durch unzureichende Dehnbarkeit oder Ablösen an Verklebungskanten auf.

### Beispiel 2 Vergleichsbeispiel

Die Herstellung erfolgte analog Beispiel 1, als Kleber wurde abweichend eine Mischung aus Polyisobutylenen eingesetzt, 35 % (w/w) hatten ein Molekulargewicht Mw von 1,2·10⁶ g/mol, 65 % (w/w) von 35.000 g/mol. Die Klebkraft auf Lack betrug 0,4 N/cm (frisch) beziehungsweise 1,7 N/cm (nach 3 Tagen Lagerung bei 90 °C) und auf Stahl 0,5 N/cm. Die Schutzfolie wurde auf frisch lackierten Blechen (2K-PU-Lack) verklebt und nach Temperaturlagerung (3 Tage 90 °C) abgezogen. Im Kantenbereich waren nur geringe Lackdeformationen zu erkennen, in der Fläche war in schrägem Licht ein geringer Brillianzverlust zu beobachten. An den Verklebungskanten war kein Schrumpf erkennbar. Auf Lackblech verklebte Muster wurden einer UV-Alterung unterzogen (1750 h Xenotest 150 entsprechend 97 kLy), nach dem Abziehen traten weder Klebemasserückstände (mit Ausnahme eines 0,1 mm schmalen Streifens an den Verklebungskanten) noch Abrisse auf, an den Verklebungskanten war kein Schrumpf erkennbar. Eine gewölbte PKW-Motorhaube mit stark ausgeprägten Sicken wurde mit der Schutzfolie unter Zuhilfenahme eines Filzrakels beklebt. Es traten keine Falten oder Löcher durch unzureichende Dehnbarkeit auf. Die gleiche Schutzfolie wurde auf einem 1 K-PU-Lack auf Musterblechen und Fahrzeug verklebt. Die Klebkraft auf Lack betrug 0,2 N/cm (frisch) beziehungsweise 1,4 N/cm (nach 3 Tagen Lagerung bei 90 °C). Bei den Kanten von Flächen, an denen die Folie stärker gedehnt wurde, hob die Schutzfolie so stark ab, daß mit einem Kantensicherungsband verstärkt werden mußte.

### Beispiel 3

Die Schutzfolie wurde durch Coextrusion von drei Schichten einschließlich Kleber hergestellt. Rohstoffe:
- Hauptschicht 50 µm: 60 % (w/w) aus Blockcopolymer Daplen FFC 2012 (PCD, Schmelzindex 5 g/10 min bei 230 °C und 2,16 kg, Ethylengehalt ca. 12%(w/w)), 25 % (w/w) aus Homopolymer Daplen KF 201 (PCD, Schmelzindex 8 g/10 min bei 230 °C und 2,16 kg), 6,3 % (w/w) Lupolen 1840 H (LDPE, Elenac GmbH, Schmelzindex 1,5 g/10 min bei 190 °C und 2,16 kg, Dichte 0,919 g/cm³), 8,4 % (w/w) Titandioxid und 0,3 % (w/w) Tinuvin 770.
- Haftvermittlerschicht 10 µm: wie Beispiel 1
- Kleberschicht 25 µm: Copolymer aus 60 % (w/w) Vinylacetat und 40 % (w/w) Ethylen mit einem Schmelzindex von 3 g/10 min bei 190 °C und 2,16 kg. Vor der Extrusion wurde der Kleberrohstoff zu ca. 5 mm großen Granulatteilchen unter Zusatz von ca. 1 % (w/w) Kieselsäure als Puderungsmittel verarbeitet.

Die Folie wies folgende physikalische Eigenschaften auf:

| | | |
|---|---|---|
| Gesamtdicke der Schutzfolie | 85 µm | DIN 53370 |
| Gesamtgewicht der Schutzfolie | 83 g/m² | DIN 53365 |
| Zugfestigkeit längs * | 43 N/mm² | DIN 53455-7-5 |
| Kraft bei 10 % Dehnung längs | 12 N/cm | DIN 53455-7-5 |
| Zugfestigkeit quer * | 37 N/mm² | DIN 53455-7-5 |
| Dehnung längs | 790 % | DIN 53455-7-5 |
| Dehnung quer | 860 % | DIN 53455-7-5 |
| Schrumpf längs | 0,5 % | 10 min 120 °C |
| Schrumpf quer | 0,1 % | 10 min 120 °C |
| Schlagzugzähigkeit längs | >3000 mJ/mm² | DIN 53448 |
| Schlagzugzähigkeit quer | 2800 mJ/mm² | DIN 53448 |
| UV-Durchlässigkeit (Transmission) | 0,2 % | Spektralphotometer |

| | | |
|---|---|---|
| * bei der Berechnung wurde eine Dicke von 60 µm (ohne Kleberschicht) zugrundegelegt. | | |

Die so hergestellte Rolle Schutzfolie lag in 1,5 m Breite und 1000 m Länge vor, die Wickelqualität war einwandfrei. Die Rolle ließ sich leicht und faltenfrei abwickeln und beim Gebrauch zum Schutz von Automobilen einwandfrei applizieren. Nach Gebrauch konnte diese Selbstklebefolie bis zu einem Jahr Verklebungsdauer unter Außenwitterung ohne Mängel wieder abgezogen werden. Die Schutzfolie war durch die in der folgenden Tabelle wiedergegebenen physikalischen Eigenschaften gekennzeichnet.

| | |
|---|---|
| Klebkraft auf 2K-PU-Lack nach 3 Tagen 90 °C, einem Abzugswinkel von 180° und einer Abzugsgeschwindigkeit von 300 mm/min | 2,7 N/cm |
| Klebkraft auf der Rückseite bei einem Abzugswinkel von 180° und einer Abzugsgeschwindigkeit von 300 mm/min | 0,4 N/cm |
| Klebkraft auf Stahl | 1,1 N/cm |
| Klebkraft auf Lack | 1,0 N/cm |

Die Schutzfolie wurde auf frisch lackierten Blechen (2K-PU-Lack) verklebt und nach Temperaturlagerung (3 Tage bei 90 °C) abgezogen. lm Kantenbereich waren keine Lackdeformationen zu erkennen. An den Verklebungskanten war kein Schrumpf erkennbar. Auf Lackblech verklebte Muster wurden einer UV-Alterung unterzogen (1750 h Xenotest 150 entsprechend 97 kLy). Nach dem Abziehen traten weder Klebemasserückstände noch Abrisse auf, an den Verklebungskanten war kein Schrumpf erkennbar. Eine gewölbte PKW-Motorhaube mit stark ausgeprägten Sicken wurde mit der Schutzfolie unter Zuhilfenahme eines Filzrakels beklebt. Es traten keine Falten oder Löcher durch unzureichende Dehnbarkeit oder Ablösen an Verklebungskanten auf.

### Vergleichsbeispiele

### Vergleichsbeispiel 1

Die Herstellung erfolgte wie in Beispiel 1. Als Folie wurde jedoch eine monoaxial verstreckte Folie aus Borealis P410F (Schmelzindex 0,9 g/10 min bei 230 °C und 2,16 kg, Ethylengehalt ca. 9 %) eingesetzt. Die Herstellung der Folie erfolgte wie in Vergleichsbeispiel A der DE 36 40 861 A1 beschrieben.

Die Folie wies folgende physikalische Eigenschaften auf:

| | | |
|---|---|---|
| Gesamtdicke Folie mit Haftvermittler | 63 µm | DIN 53370 |
| Gesamtgewicht Folie mit Haftvermittler | 60 g/m² | DIN 53365 |
| Zugfestigkeit längs | 350 N/mm² | DIN 53455-7-5 |
| Kraft bei 10 % Dehnung längs | 150 N/15mm | DIN 53455-7-5 |
| Dehnung längs | 38 % | DIN 53455-7-5 |
| Schrumpf längs | 8 % | 10 min 120 °C |
| Schlagzugzähigkeit längs | 1200 mJ/mm² | DIN 53448 |
| Schlagzugzähigkeit quer | 250 mJ/mm² | DIN 53448 |
| UV-Durchlässigkeit (Transmission) | 95 % | Spektralphotometer |

Die Rolle ließ sich nicht abwickeln, da die Folie spleißte (in der 3. Dimension riß). Für Verklebungsversuche wurden daher Muster verwendet, die nach dem Beschichten mit Silikonpapier abgedeckt worden waren. Die Schutzfolie war durch die in der folgenden Tabelle wiedergegebenen physikalischen Eigenschaften gekennzeichnet.

| | |
|---|---|
| Gesamtdicke Schutzfolie: | 83 µm |
| Klebkraft auf 2K-PU-Lack nach 3 Tagen 90 °C, einem Abzugswinkel von 180° und einer Abzugsgeschwindigkeit von 300 mm/min | Folie spleißt |
| Klebkraft auf der Rückseite bei einem Abzugswinkel von 180° und einer Abzugsgeschwindigkeit von 300 mm/min | 1,2 N/cm |
| Klebkraft auf Stahl | 1,1 N/cm |
| Klebkraft auf Lack | 1,0 N/cm |

Die Schutzfolie wurde auf frisch lackierten Blechen (2K-PU-Lack) verklebt. Sie ließ sich nach 3 Tagen bei 90 °C nur mit Spleißern und Reißern (in Längsrichtung) abziehen. An den Verklebungskanten längs war kein Schrumpf erkennbar, in Querrichtung ein Schrumpf von 5 %. Auf Lackblech verklebte Muster wurden einer UV-Alterung unterzogen (1750 h Xenotest 150 entsprechend 97 kLy), die Schutzfolie war zu Krümeln zerfallen. An den ursprünglichen Verklebungskanten quer war noch ein starker Schrumpf erkennbar. Eine gewölbte PKW-Motorhaube mit stark ausgeprägten Sicken wurde mit der Schutzfolie unter Zuhilfenahme eines Filzrakels beklebt. Es traten starke Falten und Abrisse in Längsrichtung durch unzureichende Dehnbarkeit auf.

### Vergleichsbeispiel 2

Herstellung wie in Beispiel 1, für die Folie wurde jedoch ein PP-Randomcopolymer Novolen 3300 MC (Targor GmbH) eingesetzt: Schmelzindex 8,0 g/10 min bei 230 °C und 2,16 kg, Ethylengehalt ca. 3,5 % (w/w).

Die Folie wies folgende physikalische Eigenschaften auf:

| | | |
|---|---|---|
| Gesamtdicke Folie mit Haftvermittler | 60 µm | DIN 53370 |
| Gesamtgewicht Folie mit Haftvermittler | 59 g/m² | DIN 53365 |
| Zugfestigkeit längs | 35 N/mm² | DIN 53455-7-5 |
| Kraft bei 10 % Dehnung längs | 10 N/cm | DIN 53455-7-5 |
| Dehnung längs | 610 % | DIN 53455-7-5 |
| Schrumpf längs | 3,1 % | 10 min 120 °C |
| Schlagzugzähigkeit längs | 2100 mJ/mm² | DIN 53448 |
| Schlagzugzähigkeit quer | 800 mJ/mm² | DIN 53448 |
| UV-Durchlässigkeit (Transmission) | 0,2 % | Spektralphotometer |

Die so hergestellte Selbstklebefolie wurde beim Abwickeln an den Stellen, an denen man die Folie festhielt, stark verdehnt. Sie ließ sich aber auf ein Fahrzeug wegen der Flexibilität gut applizieren.

Die Schutzfolie wurde auf frisch lackierten Blechen (2K-PU-Lack) verklebt und nach 3 Tagen bei 90 °C abgezogen. An allen Verklebungskanten war ein deutlicher Schrumpf erkennbar (Kleberrückstände in mehreren mm Breite). Auf Lackblech verklebte Muster wurden einer UV-Alterung unterzogen (1750 h Xenotest 150 entsprechend 97 kLy). Nach dem Abziehen traten keine Klebemasserückstände auf, jedoch mehrere Abrisse, an zwei Verklebungskanten war starker Schrumpf aufgetreten. Eine gewölbte PKW-Motorhaube mit stark ausgeprägten Sicken wurde mit der Schutzfolie unter Zuhilfenahme eines Filzrakels beklebt. Es traten keine Falten oder Löcher durch unzureichende Dehnbarkeit oder Ablösen an Verklebungskanten auf.

### Vergleichsbeispiel 3

Herstellung wie Beispiel 1, für die Folie wurde jedoch ein PP-Homopolymer Novolen 1102 M (Targor GmbH) eingesetzt: Schmelzindex 8,0 g/10 min bei 230 °C und 2,16 kg, Ethylengehalt null. Weiterhin wurden Lichtschutzmittel und Titandioxid weggelassen.

Die Folie wies folgende physikalische Eigenschaften auf:

| | | |
|---|---|---|
| Gesamtdicke Folie mit Haftvermittler | 60 µm | DIN 53370 |
| Gesamtgewicht Folie mit Haftvermittler | 55 g/m² | DIN 53365 |
| Zugfestigkeit längs | 50 N/mm² | DIN 53455-7-5 |
| Kraft bei 10 % Dehnung längs | 17 N/cm | DIN 53455-7-5 |
| Dehnung längs | 640 % | DIN 53455-7-5 |
| Schrumpf längs | 0,5% | 10 min 120°C |
| Schlagzugzähigkeit längs | 2800 mJ/mm² | DIN 53448 |
| Schlagzugzähigkeit quer | 200 mJ/mm² | DIN 53448 |
| UV-Durchlässigkeit (Transmission) | 94 % | Spektralphotometer |

Die Schutzfolie wurde auf frisch lackierten Blechen (2K-PU-Lack) verklebt und nach 3 Tagen 90 °C abgezogen. Schrumpf oder Abrisse wurden nicht beobachtet. Auf Lackblech verklebte Muster wurden einer UV-Alterung unterzogen (1750 h Xenotest 150 entsprechend 97 kLy). Die Folie war völlig zerfallen, es war jedoch noch erkennbar, daß kein Schrumpf statt gefunden hat. Eine gewölbte PKW-Motorhaube mit stark ausgeprägten Sicken wurde mit der Schutzfolie unter Zuhilfenahme eines Filzrakels beklebt. Es traten einige Falten aber kein Ablösen an den Verklebungskanten auf.

### Vergleichsbeispiel 4

Herstellung wie in Beispiel 1, für die Folie wurde jedoch eine Mischung aus 37 % (w/w) PP-Homopolymer Novolen 1102 M (Targor GmbH, Schmelzindex 8,0 g/10 min bei 230 °C und 2,16 kg), 54,3% (w/w) LDPE Lupolen 1840 H (Elenac GmbH, Schmelzindex 1,5 g/10 min bei 190 °C und 2,16 kg) und 17,3% (w/w), 8,4 % (w/w) Titandioxid und 0,3 % (w/w) des HALS-Stabilisators Tinuvin 770 eingesetzt.

Die Folie wies folgende physikalische Eigenschaften auf:

| | | |
|---|---|---|
| Gesamtdicke Folie mit Haftvermittler | 68 µm | DIN 53370 |
| Gesamtgewicht Folie mit Haftvermittler | 63 g/m² | DIN 53365 |
| Zugfestigkeit längs | 30 N/mm² | DIN 53455-7-5 |
| Kraft bei 10 % Dehnung längs | 13 N/cm | DIN 53455-7-5 |
| Dehnung längs | 720 % | DIN 53455-7-5 |
| Schrumpf längs | 2,5 % | 10 min 120°C |
| Schlagzugzähigkeit längs | 3200 mJ/mm² | DIN 53448 |
| Schlagzugzähigkeit quer | 300 mJ/mm² | DIN 53448 |
| UV-Durchlässigkeit (Transmission) | 0,2 % | Spektralphotometer |

Die Schutzfolie war durch die in der folgenden Tabelle wiedergegebenen physikalischen Eigenschaften gekennzeichnet.

| | |
|---|---|
| Gesamtdicke Schutzfolie: | 81 µm |
| Klebkraft auf 2K-PU-Lack nach 3 Tagen 90 °C, einem Abzugswinkel von 180° und einer Abzugsgeschwindigkeit von 300 mm/min | 3,6 N/cm |
| Klebkraft auf der Rückseite bei einem Abzugswinkel von 180° und einer Abzugsgeschwindigkeit von 300 mm/min | 0,7 N/cm |
| Klebkraft auf Stahl | 1,1 N/cm |
| Klebkraft auf Lack | 1,0 N/cm |

Die Schutzfolie wurde auf frisch lackierten Blechen (2K-PU-Lack) verklebt und nach 3 Tagen bei 90 °C abgezogen. An den Verklebungskanten waren ein geringer Schrumpf sowie Kleberrückstände erkennbar. An den Rändern und unter Falten traten geringe Lackdeformationen auf. Auf Lackblech verklebte Muster wurden einer UV-Alterung unterzogen (1750 h Xenotest 150 entsprechend 97 kLy). Nach dem Abziehen blieben keine Klebemasserückstände zurück. Eine gewölbte PKW-Motorhaube mit stark ausgeprägten Sicken wurde mit der Schutzfolie unter Zuhilfenahme eines Filzrakels beklebt. Es trat verstärkt Faltenbildung auf. Beim Demaskieren nach 48 Stunden riß die Folie in einigen Fällen parallel zur Längsrichtung streifenweise ab.

## Patentansprüche

1. Selbstklebende Schutzfolie mit einer Trägerschicht und einer Kleberschicht, wobei die Kleberschicht aus mindestens einem Copolymeren aus Ethylen und Vinylacetat besteht,
**dadurch gekennzeichnet, daß**
- die Trägerschicht eine ungereckte Folie ist,
- die Trägerschicht mindestens ein Polypropylen-Blockcopolymer enthält und
- der Gehalt an Polypropylen-Blockcopolymer 10 bis 95 % (w/w) der Schutzfolie ausmacht.

2. Selbstklebende Schutzfolie gemäß Anspruch 1, **dadurch gekennzeichnet, daß** die Klebkraft auf Stahl zwischen 0,2 und 3,8 N/cm liegt, insbesondere zwischen 0,7 und 1,7 N/cm.

3. Selbstklebende Schutzfolie gemäß den Ansprüchen 1 und 2, **dadurch gekennzeichnet, daß** die Schlagzugzähigkeit sowohl in Längs- als auch in Querrichtung mindestens 1000 mJ/mm² beträgt.

4. Selbstklebende Schutzfolie gemäß den Ansprüchen 1 bis 3, **dadurch gekennzeichnet, daß** der Schrumpf sowohl in Längs- als auch in Querrichtung weniger als 3 % beträgt, bevorzugt weniger als 1 %.

5. Selbstklebende Schutzfolie gemäß den Ansprüchen 1 bis 4, **dadurch gekennzeichnet, daß** die UV-Durchlässigkeit im Bereich von 290 bis 360 nm unter 1 % liegt.

6. Selbstklebende Schutzfolie gemäß den Ansprüchen 1 bis 5, **dadurch gekennzeichnet, daß** die Kraft bei 10 % Dehnung 25 N/15 mm, bevorzugt 16 N/15 mm, sowohl in Längs- als auch in Querrichtung nicht überschreitet

7. Selbstklebende Schutzfolie gemäß den Ansprüchen 1 bis 6, **dadurch gekennzeichnet, daß** die Dicke der Trägerschicht zwischen 20 und 80 µm beträgt, bevorzugt einschließlich der Haftvermittlerschicht.

8. Selbstklebende Schutzfolie gemäß den Ansprüchen 1 bis 7, **dadurch gekennzeichnet, daß** der Anteil an Propylen in einer Folienschicht mindestens 65 % (w/w) beträgt.

9. Selbstklebende Schutzfolie gemäß den Ansprüchen 1 bis 8, **dadurch gekennzeichnet, daß** der Ethylengehalt des Polypropylen-Blockcopolymeren zwischen 3 und 15 % (w/w) liegt.

10. Selbstklebende Schutzfolie gemäß den Ansprüchen 1 bis 9, **dadurch gekennzeichnet, daß** der Schmelzindex des Polypropylen-Blockcopolymeren zwischen 0,8 und 15 g/10 min bei 230 °C und 2,16 kg beträgt.

11. Selbstklebende Schutzfolie gemäß den Ansprüchen 1 bis 10, **dadurch gekennzeichnet, daß** die Trägerschicht mindestens ein Lichtschutzmittel in einer Menge von mindestens 0,15 % (w/w) enthält.

12. Selbstklebende Schutzfolie gemäß den Ansprüchen 1 bis 11, **dadurch gekennzeichnet, daß** der Gehalt an Vinylacetat in der Kleberschicht mindestens 40 % (w/w) beträgt, bevorzugt 55 bis 70 % (w/w).

13. Selbstklebende Schutzfolie gemäß den Ansprüchen 1 bis 12, **dadurch gekennzeichnet, daß** sich zwischen der Trägerschicht und der Klebemasse ein Haftvermittler befindet.

14. Selbstklebende Schutzfolie gemäß den Ansprüchen 1 bis 13, **dadurch gekennzeichnet, daß** die Trägerschicht zusammen mit der Haftvermittlerschicht coextrudiert wird.

15. Selbstklebende Schutzfolie gemäß zumindest einem der vorhergehenden Ansprüche, erhältlich durch simultane Coextrusion der Klebemasse und der Trägerfolie.

16. Verwendung einer Schutzfolie gemäß zumindest einem der vorhergehenden Ansprüche auf lackierten Flächen von Fahrzeugen oder Fahrzeugteilen, wobei die Applikation der Schutzfolie bevorzugt vor der Fahrzeugmontage erfolgt.

## Claims

1. Self-adhesive protective film having a backing layer and an adhesive layer, the adhesive layer comprising at least one copolymer of ethylene and vinyl acetate,
**characterized in that**
- the backing layer is an undrawn film,
- the backing layer comprises at least one polypropylene block copolymer and
- the amount of polypropylene block copolymer makes up from 10 to 95% (w/w) of the protective film.

2. Self-adhesive protective film according to claim 1, **characterized in that** the bond strength to steel is between 0.2 and 3.8 N/cm, in particular between 0.7 and 1.7 N/cm.

3. Self-adhesive protective film according to claims 1 and 2, **characterized in that** the tensile impact strength is at least 1 000 mJ/mm² in both machine and cross directions.

4. Self-adhesive protective film according to claims 1 to 3, **characterized in that** the shrinkage is at least less than 3%, preferably less than 1%, in both machine and cross directions.

5. Self-adhesive protective film according to claims 1 to 4, **characterized in that** the UV transmittance in the range from 290 to 360 nm is below 1 %.

6. Self-adhesive protective film according to claims 1 to 5, **characterized in that** the force at 10% elongation does not exceed 25 N/15 mm, preferably 16 N/15 mm, in either the machine or cross directions.

7. Self-adhesive protective film according to claims 1 to 6, **characterized in that** the thickness of the backing layer is between 20 and 80 µm, preferably including the adhesion promoter layer.

8. Self-adhesive protective film according to claims 1 to 7, **characterized in that** the fraction of propylene in one film layer is at least 65% (w/w).

9. Self-adhesive protective film according to claims 1 to 8, **characterized in that** the ethylene content of the polypropylene block copolymer is between 3 and 15% (w/w).

10. Self-adhesive protective film according to claims 1 to 9, **characterized in that** the melt index of the polypropylene block copolymer is between 0.8 and 15 g/10 min at 230°C and 2.16 kg.

11. Self-adhesive protective film according to claims 1 to 10, **characterized in that** the backing layer comprises at least one light stabilizer in an amount of at least 0.15% (w/w).

12. Self-adhesive protective film according to claims 1 to 11, **characterized in that** the vinyl acetate content of the adhesive layer is preferably at least 40% (w/w), with particular preference from 55 to 70% (w/w).

13. Self-adhesive protective film according to claims 1 to 12, which comprises an adhesion promoter between the backing layer and the adhesive composition.

14. Self-adhesive protective film according to claims 1 to 13, **characterized in that** the backing layer is coextruded together with the adhesion promoter layer.

15. Self-adhesive protective film according to at least one of the preceding claims, obtainable by simultaneous coextrusion of the adhesive composition and of the backing film.

16. Use of a protective film according to at least one of the preceding claims on painted areas of vehicles or vehicle parts, the protective film being applied preferably before the vehicle is assembled.

## Revendications

1. Feuille de protection autoadhésive comportant une couche de support et une couche d'adhésif, où la couche d'adhésif consiste en au moins un copolymère d'éthylène et d'acétate de vinyle, **caractérisée en ce que**
- la couche de support est une feuille non étirée,
- la couche de support contient au moins un copolymère séquencé de polypropylène, et
- la teneur en copolymère séquencé de polypropylène est de 10 à 95% (en poids) de la feuille de protection.

2. Feuille de protection autoadhésive suivant la revendication 1, **caractérisée en ce que** la force d'adhérence sur l'acier se situe entre 0,2 et 3,8 N/cm, en particulier entre 0,7 et 1,7 N/cm.

3. Feuille de protection autoadhésive suivant les revendications 1 et 2, **caractérisée en ce que** la ténacité au choc - traction, en direction tant longitudinale que transversale, est d'au moins 1000 mJ/mm².

4. Feuille de protection autoadhésive suivant les revendications 1 à 3, **caractérisée en ce que** le retrait, en direction tant longitudinale que transversale, est de moins de 3%, de préférence de moins de 1%.

5. Feuille de protection autoadhésive suivant les revendications 1 à 4, **caractérisée en ce que** la perméabilité aux UV est de moins de 1% dans la plage de 290 à 360 nm.

6. Feuille de protection autoadhésive suivant les revendications 1 à 5, **caractérisée en ce que** la force pour 10% d'allongement n'excède pas 25 N/15 mm, de préférence 16 N/15 mm, en direction tant longitudinale que transversale.

7. Feuille de protection autoadhésive suivant les revendications 1 à 6, **caractérisée en ce que** l'épaisseur de la couche de support est de 20 à 80 µm, de préférence y compris la couche d'agent adhérisant.

8. Feuille de protection autoadhésive suivant les revendications 1 à 7, **caractérisée en ce que** la fraction de propylène dans une couche de la feuille est d'au moins 65% (en poids).

9. Feuille de protection autoadhésive suivant les revendications 1 à 8, **caractérisée en ce que** la teneur en éthylène du copolymère séquencé de polypropylène se situe entre 3 et 15% (en poids).

10. Feuille de protection autoadhésive suivant les revendications 1 à 9, **caractérisée en ce que** l'indice de fusion du copolymère séquencé de polypropylène se situe entre 0,8 et 15 g/10 min. à 230°C et 2,16 kg.

11. Feuille de protection autoadhésive suivant les revendications 1 à 10, **caractérisée en ce que** la couche de support contient au moins un agent photoprotecteur en une quantité d'au moins 0,15% (en poids).

12. Feuille de protection autoadhésive suivant les revendications 1 à 11, **caractérisée en ce que** la teneur en acétate de vinyle dans la couche d'adhésif est d'au moins 40% (en poids), de préférence de 55 à 70% (en poids).

13. Feuille de protection autoadhésive suivant les revendications 1 à 12, **caractérisée en ce qu'**entre la couche de support et la masse adhésive se trouve un agent adhérisant.

14. Feuille de protection autoadhésive suivant les revendications 1 à 13, **caractérisée en ce que** la couche de support est coextrudée avec la couche d'agent adhérisant.

15. Feuille de protection autoadhésive suivant au moins l'une quelconque des revendications qui précèdent, et que l'on peut obtenir par coextrusion de la masse adhésive et de la feuille de support.

16. Utilisation d'une feuille de protection suivant au moins l'une quelconque des revendications qui précèdent sur des surfaces peintes de véhicules ou de parties de véhicules, où l'application de la feuille de protection a de préférence lieu avant le montage du véhicule.
